**Europäisches Patentamt**

**European Patent Office**

**Office européen des brevets**

(19)

(11) Veröffentlichungsnummer: **0 170 916**
**B1**

(12)  **EUROPÄISCHE PATENTSCHRIFT**

(45) Veröffentlichungstag der Patentschrift:
**03.05.89**

(51) Int. Cl.⁴: **H 04 B 3/44**, H 04 B 3/46

(21) Anmeldenummer: **85108532.4**

(22) Anmeldetag: **09.07.85**

(54) **Schaltungsanordnung mit zwei miteinander entgegengesetzter Polung an einen Verbraucher anschliessbaren Speiseschaltungen.**

(30) Priorität: **11.07.84  DE 3425536**

(43) Veröffentlichungstag der Anmeldung:
**12.02.86 Patentblatt 86/7**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**DE-A- 3 034 927**
**DE-A- 3 216 497**
**DE-A- 3 308 741**
**DE-B- 2 620 348**

(73) Patentinhaber: **Siemens Aktiengesellschaft Berlin und München, Wittelsbacherplatz 2, D-8000 München 2 (DE)**

(72) Erfinder: **Kraicar, Heinz, Dipl.-Ing., Lindenberg 60 A, D-8134 Pöcking (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltungsanordnung mit zwei mit einander entgegengesetzter Polung an einen Verbraucher anschliessbaren Speiseschaltungen und mit einem jeweils über Speisestrompfade an die Speiseschaltungen angeschlossenen Anschlusspaar für einen Lastwiderstand und mit einer Vorrichtung zur wahlweisen Speisung des Lastwiderstandes mittels der einen oder der anderen Speiseschaltung.

Eine derartige Schaltungsanordnung ist bereits aus der DE-A-32 16 497 bekannt. Bei der bekannten Schaltungsanordnung besteht die eine Speiseschaltung aus einer Konstantstromquelle. Durch Anschalten eines Spannungsbegrenzers an die Konstantstromquelle erhält man die weitere Speiseschaltung. Im Hinblick auf einen Personenschutz in der Ortungsstellung wird eine Reduktion der Gerätespannung auf z.B. maximal 60 V vorgenommen.

Die beiden Speiseschaltungen sind über ein gemeinsames Paar von Speisestrompfaden an einen Umschalter geführt, der den Lastwiderstand wahlweise mit der einen oder mit der anderen Polarität an die beiden Speisestrompfade anschliesst. Als Umschalter dient ein Relais, das eine selbsttätige Fehlerortung ermöglicht und entsprechend angesteuert wird.

Der Lastwiderstand ist eine Fernspeiseschleife, die mehrere in Serie geschaltete Verbraucher mit konstantem Gleichstrom speist. Die Fernspeiseschleife ist mit Querzweigen versehen, die jeweils eine für die Fernspeisespannung in Sperrrichtung gepolte Diode und einen dazu in Serie angeordneten Widerstand enthält. Legt man die entgegengesetzt zur Fernspeisespannung gepolte Prüfspannung an den Eingang der Fernspeiseschleife, und ist die Fernspeiseschleife an irgendeiner Stelle unterbrochen, so fliesst in allen vor der Unterbrechungsstelle liegenden Querzweigen ein Strom. Der Summenstrom wird in der Speisestelle gemessen. Jedem Messwert ist ein unterbrochenes Verstärkerfeld zugeordnet.

Das Fernspeisegerät wird von Konstantstrom auf Konstantspannung umgeschaltet. Dies wird umso schwieriger, je grösser die Fernspeiseleistung im Verhältnis zur Ortungsleistung ist. Ausserdem wird die Verpolung bei Serienbetrieb von Fernspeisegeräten vergleichsweise kompliziert.

Eine andere Möglichkeit zur wahlweisen Speisung eines elektrischen Verbrauchers mit Spannungen verschiedener Polarität besteht in einer Verwendung mechanischer Kontakte mit Handbetätigung.

Weiterhin ist es aus W.S. Jahn: «Elektrisch Fernüberwachen und Fernbedienen», 1962, Richard Pflaum Verlag München, Seite 218, bereits bekannt, bei der elektrischen Fernsteuerung elektrische Leitungen dadurch mehrfach auszunutzen, dass Fernsteuersignale unterschiedlicher Polarität Verwendung finden.

Aufgabe der Erfindung ist es, eine Schaltungsanordnung der eingangs genannten Art derart auszubilden, dass sich eine besonders grosse Zuverlässigkeit ergibt. Insbesondere soll die Schaltungsanordnung zur Verwendung in Fernspeiseeinrichtungen der elektrischen Nachrichtenübertragungstechnik geeignet sein, die zusätzlich zu einer Fernspeisestromquelle eine Prüfspannungsquelle entgegengesetzter Polarität enthalten.

Gemäss der Erfindung wird die Schaltungsanordnung derart ausgebildet, dass wenigstens bei einer der Speiseschaltungen zur Aktivierung vorgesehene Schaltmittel ausserhalb ihres Ausgangskreises angeordnet sind, dass wenigstens bei einer mittels ausserhalb des Ausgangskreises angeordneter Schaltmittel aktivierbaren Speiseschaltung zwischen der Speiseschaltung und dem Anschlusspaar für einen Lastwiderstand in einem der Speisestrompfade ein Transistor angeordnet ist und dass die Steuerelektrode des Transistors an ein derartiges Steuerpotential geführt ist, dass der Transistor bei aktivierter zugeordneter Speiseschaltung leitend und bei deaktivierter zugeordneter Speiseschaltung gesperrt ist.

Durch diese Massnahmen ergibt sich eine Schaltungsanordnung, bei der wenigstens eine der Speiseschaltungen in ihrem Ausgangskreis zur wahlweisen Anschaltung an den Lastwiderstand keinen mechanischen Kontakt erfordert. Der Ausgang der Speiseschaltung ist vielmehr über einen selbsttätig ein- und ausschaltbaren Halbleiterschalter an den Lastwiderstand geführt. Der Halbleiterschalter hat die Eigenschaft, dass er bei aktivierter Speiseschaltung durchlässig und bei deaktivierter Speiseschaltung gesperrt ist. Da die beiden Speiseschaltungen abwechselnd aktiviert oder deaktiviert werden, verhindert der Halbleiterschalter, dass der Ausgang einer deaktivierten Speiseschaltung den Ausgang einer aktivierten Speiseschaltung belastet. Dies ist insbesondere bei Speiseschaltungen von Bedeutung, bei denen am Ausgang eine Diode wirksam ist, die für die Ausgangsspannung der Speiseschaltung gesperrt, für die Ausgangsspannung der anderen Speiseschaltung dagegen in Durchlassrichtung gepolt ist und daher für die andere Speiseschaltung praktisch einen Kurzschluss der Ausgangsspannung bedeuten würde. Eine derartige am Ausgang wirksame Diode kann insbesondere Bestandteil einer Gleichrichterschaltung eines Umrichters oder Gleichrichters oder eine zum Schutz der Speiseschaltung zusätzlich angebrachte Diode sein.

Durch die erfindungsgemässen Massnahmen ergibt sich eine Schaltungsanordnung, die die gewünschte Speisung eines Lastwiderstandes mit Strömen entgegengesetzter Polarität mit besonders grosser Zuverlässigkeit und durch Anwendung besonders einfach realisierbarer Massnahmen ermöglicht.

Bei einer Verwendung der Schaltungsanordnung in einer Fernspeisevorrichtung mit Fehlerortungs- und/oder Prüfvorrichtung wird als Prüfungsspannungsquelle bzw. Ortungsspannungsquelle zweckmässigerweise eine eigene Hilfsspannung verwendet, die vorteilhaft durch einen relativ wenig aufwendigen Kleinumrichter erzeugt werden kann. Die Hilfsspannung ist konstant und von vorneherein für Personenschutzanforderungen dimensioniert.

Vorteilhafte Ausgestaltungen der Erfindung ergeben sich aus den abhängigen Ansprüchen.

Die Erfindung wird anhand der in den Figuren dargestellten Ausführungsbeispiele näher erläutert.

Es zeigen

Fig. 1 eine Schaltungsanordnung mit zwei Speiseschaltungen zur Speisung eines Lastwiderstandes mit Spannungen entgegengesetzter Polarität,

Fig. 2 eine Fernspeiseschleife mit ferngespeisten Regeneratoren und Dioden-Querzweigen,

Fig. 3 eine Schaltungsanordnung mit zwei Speiseschaltungen, von denen die eine über einen elektronischen und die andere über einen mechanischen Schalter an einen gemeinsamen Lastwiderstand geführt ist,

Fig. 4 einen elektronischen Schalter mit einem Feldeffekttransistor,

Fig. 5 eine Schaltungsanordnung, bei der von zwei Speiseschaltungen die eine in einem Fernspeisegerät und die andere in einem Fehlerortungsgerät angeordnet ist,

Fig. 6 eine Schaltungsanordnung, bei der von zwei Speiseschaltungen die eine aus zwei Fernspeisegeräten zusammengesetzt ist und die andere in einem Fehlerortungsgerät angeordnet ist,

Fig. 7 eine Schaltungsanordnung mit zwei gleichartig ausgebildeten Fernspeisegeräten, die je eine Fernspeisestromquelle und eine Prüfspannungsquelle enthalten,

Fig. 8 eine Speiseschaltung, die als stillsetzbarer Umrichter ausgebildet ist, und

Fig. 9 eine Schaltungsanordnung mit einem durch eine Hilfsspannungsquelle angesteuerten Halbleiterschalter.

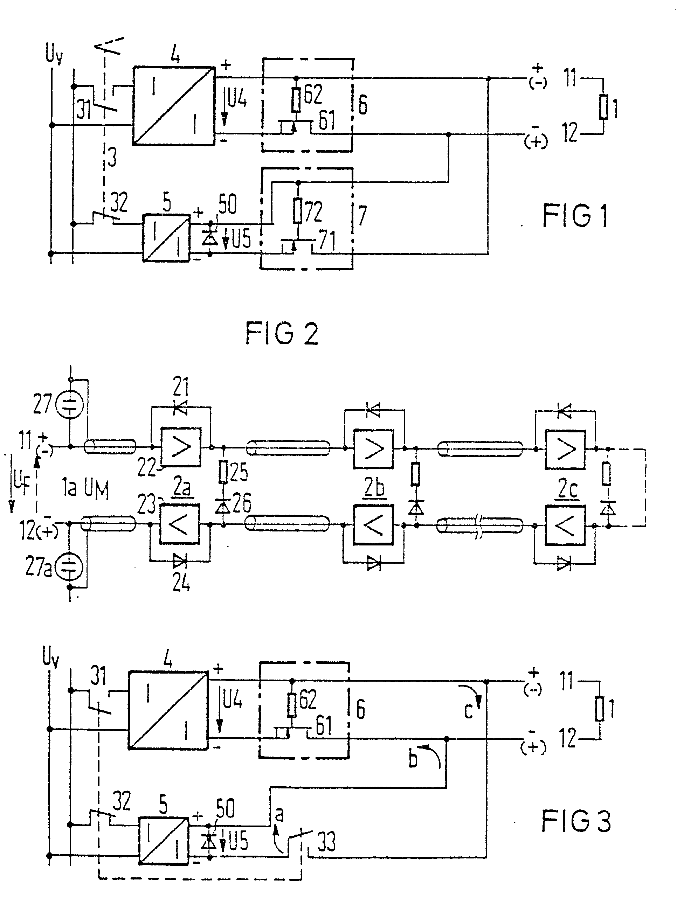

Die in Fig. 1 gezeigte Schaltungsanordnung enthält zwei Speiseschaltungen 4 und 5. Die Speiseschaltung 4 dient als Fernspeisestromquelle und ist über den Schalter 31 an die Versorgungsspannung $U_V$ angeschlossen. Die Speiseschaltung 5 dient als Prüfspannungsquelle und ist über den Schalter 32 mit der Versorgungsspannung $U_V$ verbunden. Die Schalter 31 und 32 werden derart gemeinsam betätigt, dass jeweils der eine geöffnet und der andere gesperrt ist.

Die Speiseschaltung 4 gibt am Ausgang die positive Spannung U4 ab. Am Ausgang der Speiseschaltung 5 ist die für die Ausgangsspannung U5 in Sperrichtung gepolte Diode 50 wirksam.

Die Ausgänge der Speiseschaltungen 4 und 5 sind über je einen Halbleiterschalter 6 bzw. 7 an den gemeinsamen Lastwiderstand 1 geführt.

Von dem Ausgang der Speiseschaltung 4 sind der Pluspol unmittelbar an den Anschluss 11 des Lastwiderstandes 1 und der Minuspol über die Source-Drain-Strecke des Leistungs-Feldeffekttransistors 61 an den Anschluss 12 des Lastwiderstandes 1 geführt. Die Steuerelektrode des Feldeffekttransistors 61 ist über den Widerstand 62 an den Pluspol des Ausgangs der Speiseschaltung 4 geführt.

Der Halbleiterschalter 7 ist in gleicher Weise wie der Halbleiterschalter 6 aufgebaut. Die Source-Drain-Strecke ist wiederum in den Strompfad eingefügt, der vom Minuspol der Speiseschaltung 5 zum Anschluss 11 des Lastwiderstandes 1 führt.

Bei der Schaltungsanordnung nach Fig. 1 sind die Feldeffekttransistoren 61 und 71 vom n-Typ und jeweils in die Minusleitung der betreffenden Speiseschaltung eingefügt. Verwendet man einen Feldeffekttransistor vom p-Typ, so ist die Source-Drain-Strecke in die Plusleitung einzufügen, derart, dass die Source-Elektrode mit dem Pluspol des Ausgangs der Speiseschaltung 4 bzw. 5 verbunden ist. Der Gate-Vorwiderstand ist dabei an die Minusleitung der betreffenden Speiseschaltung anzuschliessen.

Fig. 2 zeigt eine Schaltungsanordnung zur Ortung einer Unterbrechungsstelle einer Fernspeiseschleife für reihengespeiste, durch Z-Dioden 21, 24 überbrückte Regeneratoren 22 und 23. Um eine Unterbrechungsstelle der Fernspeiseschleife orten zu können, ist die Fernspeiseschleife in den Zwischenstellen 2a, 2b und 2c mit Querzweigen versehen, die jeweils eine Diode 26 und einen dazu in Serie angeordneten Widerstand 25 enthalten. Die Dioden 26 sind bei Fernspeisebetrieb gesperrt. Die Fehlerortung erfolgt durch Speisung der Fernspeiseschleife mit einer Spannung mit umgekehrter Polung.

Bei der in Fig. 2 gezeigten Fernspeiseschleife ist im Normalbetrieb die Polung ohne Klammern wirksam. Bei Unterbrechung der Fernspeisestrecke wird die umgekehrte Polung, die in Klammern angegeben ist, eingeschaltet. In diesem Schaltzustand kann mit einer Strom-Spannungsmessung der Streckenwiderstand, der aus den bis zur Unterbrechungsstelle parallel geschalteten Widerständen 25 besteht, ermittelt und damit das unterbrochene Verstärkerfeld bestimmt werden.

Die in Fig. 1 gezeigte Schaltungsanordnung ermöglicht es, wahlweise die Fernspeisespannung $U_F$ oder die Ortungsspannung $U_M$ an die Fernspeiseschleife über einen Halbleiterschalter 6 anzuschalten, der ohne fremde Ansteuerung selbsttätig bei Fernspeisebetrieb leitend wird und bei Ortung sperrt.

Die nach Fig. 1 auf der Fernspeiseseite der Speiseschaltungen 4 und 5 vorgesehenen Halbleiterschalter sind – wie in der Figur dargestellt – vorzugsweise MOS-FET-Transistoren. Gegebenenfalls können z.B. bipolare Transistoren Verwendung finden.

Wenn z.B. Kontakt 31 geöffnet und Kontakt 32 geschlossen ist, dann ist nur die durch einen Hilfsumrichter gebildete Speiseschaltung 5 in Betrieb. Sie erzeugt z.B. 40 V und steuert den Feldeffekttransistor 71 derart an, dass er durchlässig wird. Der Feldeffekttransistor 61 wird nicht angesteuert, da die Spannung an der als Hauptumrichter ausgebildeten Speiseschaltung 4 «Null» ist. Am Fernspeiseausgang 11, 12 liegt die Ortungsspannung 40 V mit der Polung (−)/(+) an.

Diese Ortungsspannung kann in der Speiseschaltung 4 keinen Strom einspeisen, da der Feldeffekttransistor 61 sperrt.

Wenn man den Kontakt 31 schliesst und den Kontakt 32 öffnet, liegt die Fernspeisespannung mit der Polung +/− am Fernspeiseausgang 11, 12. Der Feldeffekttransistor 6 ist dann durchlässig, und der Feldeffekttransistor 7 sperrt.

Man kann so durch wechselweises Aus- und Einschalten der Speiseschaltung 4 oder 5 am Fernspeiseausgang 11, 12 entweder die Fernspeisespannung mit Konstantstrom oder die verpolte konstante Ortungsspannung erhalten.

Der Feldeffekttransistor 71 muss bei Betrieb der Speiseschaltung 4 die gesamte Fernspeisespannung sperren und eventuelle Beeinflussungs- und Blitzspannungen aushalten. In Anwendungsfällen, bei denen mit besonders grossen Überspannungen zu rechnen ist, wird entsprechend Fig. 3 anstelle des Feldeffekttransistors 71 zweckmässigerweise ein Relais verwendet. Ein wesentlicher Vorteil dieser Anordnung, dass der Hauptstromkreis nicht über einen mechanischen Kontakt geführt ist, bleibt dabei erhalten.

Die in Fig. 3 gezeigte Schaltungsanordnung stimmt mit der in Fig. 1 weitgehend überein. Die einzige Abweichung besteht darin, dass der Halbleiterschalter 7 nach Fig. 1 durch den mechanischen Kontakt 33 ersetzt ist. Der Kontakt 33 wird immer dann geschlossen, wenn die Speiseschaltung 5 aktiviert wird. Dies kann z.B. dadurch erreicht werden, dass die Wicklung eines Relais an den Eingang der Speiseschaltung 5 angeschlossen ist und der Kontakt 33 zu diesem Relais gehört.

Der Feldeffekttransistor 61 kann in vorteilhafter Weise als Halbleiterschalter beibehalten werden, weil an seine Sperrfähigkeit keine hohen Ansprüche gestellt werden. Er muss lediglich die vergleichsweise niedrige Ortungsspannung und die durch den Überspannungsableiter 27 bzw. 27a im Ortungskreis vorgegebenen Beeinflussungsspannungen sicher sperren können. Der mechanische Kontakt 33 im Ortungskreis kann eher in Kauf genommen werden, da er nur im Störungsfall benötigt wird.

Die Schaltungsanordnung nach Fig. 3 ist auch unempfindlich gegen die Überlappung der beiden Ausgangsspannungen der Speiseschaltungen 4 und 5. Wenn z.B. die Kontakte 32 bzw. 33 geschlossen sind und Kontakt 31 wird auch geschlossen, dann wird der Feldeffekttransistor 61 durchlässig. Der konstante Fernspeisestrom $I_F$ fliesst nun den Pfeilen a, b, c nach und fliesst durch die Diode 50. Für den Ortungsumrichter 5 bedeutet dies einen Kurzschluss am Ausgang. Der Ortungsumrichter 5 muss also in diesem Fall kurzschlussfest sein, wenn betrieblich Überlappungen der Haupt- und Ortungsspannung möglich sind.

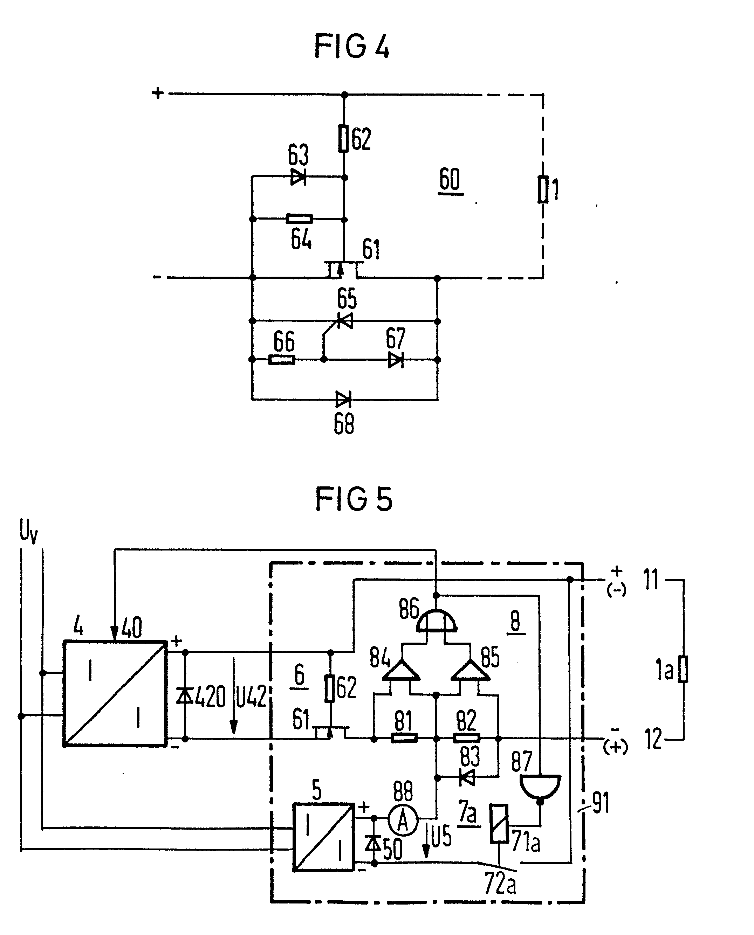

Fig. 4 zeigt einen elektronischen Schalter 60, der vorteilhaft als Halbleiterschaltung 6 Verwendung findet. Der Feldeffekttransistor 61 ist mit seiner Source-Drain-Strecke in dem vom Minuspol der zugeordneten Speiseschaltung zum Lastwiderstand 1 führenden Strompfad angeordnet und mit seiner Steuerelektrode über den Widerstand 62 an den anderen Strompfad geführt. Parallel zur Gate-Source-Strecke liegen der Widerstand 64 und die Z-Diode 63, die für die zwischen den Strompfaden liegende Spannung in Sperrrichtung gepolt ist.

Parallel zur Source-Drain-Strecke des Feldeffekttransistors 61 liegt der Thyristor 65. Der Thyristor 65 ist mit seiner Anode an die Drain-Elektrode des Feldeffekttransistors 61 geführt, d.h. er ist − bezogen auf den Strom, der von der dem Halbleiterschalter zugeordneten Speiseschaltung abgegeben wird − in Durchlassrichtung gepolt. Die Steuerelektrode des Thyristors 65 ist über den Widerstand 66 an die Kathode und über die Z-Diode 67 an die Anode des Thyristors 65 geführt. Die Z-Diode 67 liegt mit ihrer Kathode an der Anode des Thyristors 65, so dass sie für Ströme, die von der dem Halbleiterschalter 60 zugeordneten Speiseschaltung stammen, in Sperrrichtung gepolt ist. Die Diode 68 ist mit einer derartigen Polung parallel zur Source-Drain-Strecke des Feldeffekttransistors 61 angeordnet, dass der Thyristor 65 und die Diode 68 antiparallel geschaltet sind.

Die Z-Diode 63 schützt die Gate-Source-Strecke vor zu hohen Spannungen. Der Widerstand 64 ist ein Anpasswiderstand und der Widerstand 62 ist ein Ansteuerwiderstand. Diese Widerstände können in vorteilhafter Weise sehr hochohmig sein, da ein statischer Gate-Strom nicht benötigt wird.

Gegebenenfalls können die Schaltelemente 68 und/oder 65 entfallen.

Der Feldeffekttransistor 61 ist vom n-Typ und liegt in der Minusleitung. Ordnet man einen Feldeffekttransistor vom p-Typ in der Plusleitung an, so ist der Gate-Vorwiderstand an die Minusleitung anzuschliessen. Ausserdem muss die Source-Elektrode und die Anode des entsprechenden Thyristors an den Pluspol der zugeordneten Speisespannung angeschlossen werden.

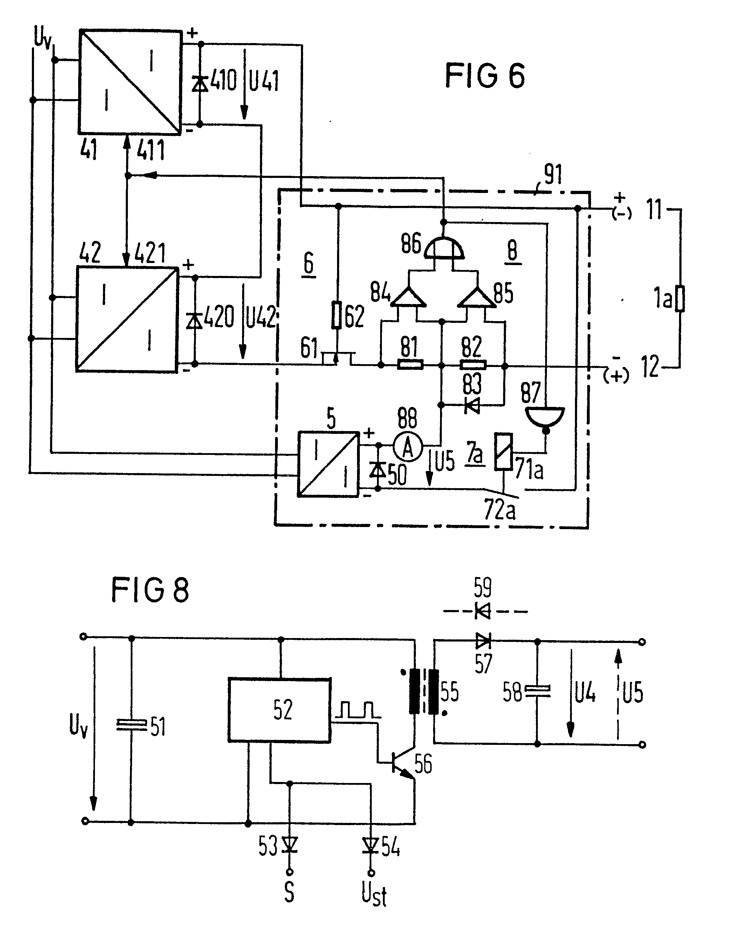

Die in Figur 5 gezeigte Schaltungsanordnung setzt sich aus zwei Baueinheiten, nämlich der als Fernspeisestromquelle dienenden Speiseschaltung 4 und der Baueinheit 91 zusammen. Die Baueinheit 91 enthält die Speiseschaltung 5, an deren Ausgang die für die Ausgangsspannung in Sperrrichtung gepolte Diode 50 wirksam ist. Der Pluspol der Speiseschaltung 5 ist über den Strommesser 88 und den Widerstand 82 an den Anschluss 12 der Fernspeiseschleife 1a geführt. Die Drain-Elektrode des Feldeffekttransistors 61 ist über den Widerstand 81 und den dazu in Serie liegenden Widerstand 82 an den Anschluss 12 der Fernspeiseschleife 1a geführt. Parallel zum Widerstand 82 liegt die für den Fernspeisestrom in Durchlassrichtung gepolte Diode 83. An den Widerstand 81 ist der Komparator 84, an den Widerstand 82 der Komparator 85 angeschlossen. Die Ausgänge der Komparatoren 84 und 85 sind über das Oder-Glied 86 an den Steuereingang 40 der Speiseschaltung 4 geführt. Ausserdem ist das

Relais 71a über den Inverter 87 an den Ausgang des Oder-Gliedes 86 angeschlossen.

Wenn der Messwiderstand 82 von genügend Strom durchflossen ist, wird über die Komparatoren 84 und 85 und über die Oder-Stufe 86 an den Steuereingang 40 des Fernspeisegerätes 4 ein «Ein»-Befehl und an das Relais 71a ein «Aus»-Befehl zum Öffnen des Kontaktes 72a gegeben.

Wenn die Fernspeisestrecke 1a unterbrochen wird, sind die Messwiderstände 81 und 82 zunächst stromlos. Dies ergibt über die Oder-Stufe 86 einen «Aus»-Befehl an das Fernspeisegerät 4 und einen «Ein»-Befehl zum Schliessen des Kontaktes 72a an das Relais 71a.

Der Feldeffekttransistor 6 verhindert den Kurzschluss des Ortungsstromes über das Fernspeisegerät 4. Der Ortungsstrom am Strommesser 88 gibt Auskunft über den Zustand der Fernspeisestrecke 1a. Jedem Ortungsstrom ist ein unterbrochenes Streckenfeld zugeordnet. Wenn die Fernspeisestrecke in Ordnung ist, fliesst über den Messwiderstand 82 soviel Strom, dass an das Relais 71a ein «Aus»-Befehl und an das Fernspeisegerät 4 ein «Ein»-Befehl ergeht.

Die Schaltungsanordnung nach Fig. 6 stimmt mit der nach Fig. 5 weitgehend überein. Abweichend von Fig. 5 sind anstelle der Speiseschaltung 4 zwei Speiseschaltungen 41 und 42 vorgesehen, die am Eingang parallel und am Ausgang in Serie zueinander geschaltet sind. Beide Speiseschaltungen 41 und 42 weisen eine an ihrem Ausgang wirksame, für die Ausgangsspannung in Sperrichtung gepolte Diode 410 bzw. 420 auf. Der Ausgang des Oder-Gliedes 86 ist an die Steuereingänge 411 und 421 der Speiseschaltungen 41 und 42 geführt. Der Lastwiderstand ist durch die Fernspeiseschleife 1a gebildet.

Die Schaltungsanordnung besteht aus drei Baueinheiten, nämlich dem Fernspeisegerät 41, dem Fernspeisegerät 42 und der Baueinheit 91, die als zusätzliche, selbständige Ortungseinrichtung zur Prüfung des Schleifenwiderstandes der Fernspeiseschleife 1a dient.

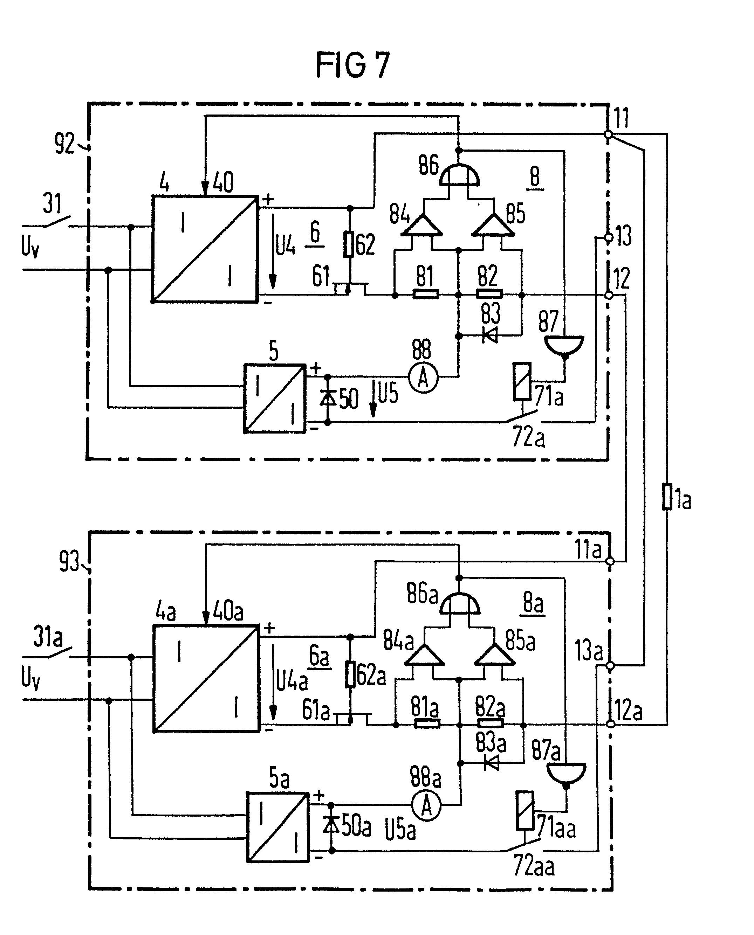

Bei der in Fig. 7 gezeigten Schaltungsanordnung wird die Fernspeiseschleife 1a von zwei in Serie geschalteten Fernspeisestromquellen gespeist. Anders als bei der Schaltungsanordnung nach Fig. 6 finden zwei in gleicher Weise aufgebaute Baueinheiten 92 und 93 Verwendung. Die Baueinheiten 92 und 93 stimmen jeweils mit der Schaltungsanordnung nach Fig. 5 weitgehend überein und sind jeweils ein Fernspeisegerät mit eingebauter eigener Ortungsschaltung. Die einzige Abweichung besteht darin, dass der Relaiskontakt 72a bzw. 72aa nicht fest mit dem Anschluss 11 verbunden ist, sondern an einen eigenen Anschluss 13 bzw. 13a herausgeführt ist.

Die vorgesehene Verwendung gleichartiger Fernspeisegeräte hat den Vorteil, dass kein eigener Ortungseinsatz gefertigt werden muss. Auch der Forderung nach einer Austauschbarkeit der Fernspeisegeräte kommt die Schaltungsanordnung nach Fig. 7 entgegen.

In Fig. 7 sind für die Baueinheit 92 dieselben Bezugszeichen wie in Fig. 5 verwendet. Für die Baueinheit 93 sind die im übrigen gleichen Bezugszeichen jeweils mit dem Buchstaben a versehen.

Die ausgangsseitige Serienschaltung der beiden Fernspeisegeräte ergibt sich daraus, dass der Anschluss 12 der Baueinheit 92 mit dem Anschluss 11a der Baueinheit 93 verbunden ist. Ausserdem ist der Anschluss 11 der Baueinheit 92 mit dem Anschluss 13a der Baueinheit 93 verbunden.

In Fig. 7 ist eine Fernspeiseeinrichtung mit zwei in Reihe geschalteten Fernspeiseeinsätzen 92 und 93, die in gleicher Weise aufgebaut sind und jeweils eine vollständige Ortungseinrichtung enthalten. Wenn die Fernspeisestrecke 1a unterbrochen wird, werden die Messwiderstände 81 und 81a stromlos, und die Fernspeisegeräte 92 und 93 werden ausgeschaltet. Gleichzeitig kommt ein «Ein»-Befehl an die Ortungsrelais 71a und 71aa. Da die Ortungseinrichtung 8 des Gerätes 92 nicht an die Fernspeisestrecke angeschlossen ist, kann sie den Ortungsvorgang des Fernspeisegerätes 93 nicht stören. Der Strommesser 88a gibt Auskunft über den Ort der Streckenunterbrechung. Der Messwiderstand 82a stellt fest, ob die Fernspeisestrecke 1a in Ordnung ist. Ist dies der Fall, wird das Gerät 93 eingeschaltet und gleichzeitig der Relaiskontakt 72a geöffnet. Das Gerät 92 schaltet sich zunächst nicht ein, da seine Ortung nichts messen kann. Durch das Gerät 92 fliesst jedoch schon ein Strom, welcher von dem in Reihe geschalteten Gerät 93 kommt. Der Messwiderstand 81 registriert nun, ob dieser Strom einen bestimmten Wert überschritten hat. Ist dies der Fall, dann wird auch das Gerät 92 eingeschaltet.

Mit Hilfe des in Fig. 7 gezeigten Schaltungsaufbaus erspart man sich aufwendige potentialfreie Querverbindungen zwischen den Fernspeisegeräten.

Es ist noch zu berücksichtigen, dass der Feldeffekttransistor 61 sperrt, wenn das Gerät 92 nicht eingeschaltet ist. Gerade dies ist aber der Fall, da sich nach der Ortung immer erst das Gerät 93 einschaltet. Der Feldeffekttransistor 61 würde die gesamte Ausgangsspannung des Gerätes 93 aufnehmen, ohne leitend zu werden und damit die Inbetriebnahme des Gerätes 92 verhindern. Das Gleiche würde passieren, wenn man den Schalter 31, der insbesondere ein Automat ist, einschaltet und den Schalter 31a fälschlicherweise geöffnet lässt. Eine Behebung dieser Schwierigkeiten ermöglicht die in Fig. 4 gezeigte Halbleiterschaltung 60. Bei dieser Halbleiterschaltung 60 ist der Feldeffekttransistor 61 durch den Thyristor 65 ergänzt, der vorzugsweise ein Kleinthyristor ist. Wird die in Fig. 4 gezeigte Anordnung am Gate G nicht angesteuert und baut sich von der Drain- in Richtung zur Source-Elektrode eine Spannung auf, so verhält sich die Anordnung wie eine Vierschichtdiode. Wird die Zenerspannung der Z-Diode 67 überschritten, so zündet der Thyristor 65. Der Strom im Thyristor 65 wird vom Feldeffekttransistor 61 übernommen, sobald man das Gate G ansteuert. Die Übernahme des Stromes erfolgt vollständig, da die Durchlassspannung des Feldeffekttransistors 61 nur einen Bruchteil derjenigen des Thyristors 65 beträgt. Wird daran anschliessend die Ansteuerung vom Gate G wieder weggenommen, so sperrt die Anordnung wieder, da der Thyristor 65 stromlos war. Dies ist auch nötig, da bei einer Unterbrechung der Fernspeisestrecke 1a vom leitenden Zustand in den sperrenden Zustand übergegangen werden muss.

Der Thyristor 65 ist zugleich ein Schutz für den Feldeffekttransistor 61 gegen Beeinflussungen und Blitzspannungen. Es kann keine höhere Spannung als die Zenerspannung der Z-Diode 67 am Feldeffekttransistor 61 von der Drain- zur Source-Elektrode auftreten. Diese Zenerspannung ist zweckmässigerweise etwas höher als die Ortungsspannung, so dass bei Ortung die Sperrfähigkeit der Anordnung zu gewährleisten ist. Zum Schutz der Anordnung gegen Überspannungen von der Source- zur Drain-Elektrode ist eine Diode 68 parallel geschaltet. Verwendet man als Thyristor 65 einen solchen, der von der Kathode zur Anode ein Diodenverhalten hat, z.B. einen sogenannten Gate turn off-Thyristor, so übernimmt der Thyristor 65 die Schutzfunktion der Diode 68 und die Diode 68 kann selbst dann entfallen, wenn mit Überspannungen der genannten Art zu rechnen ist.

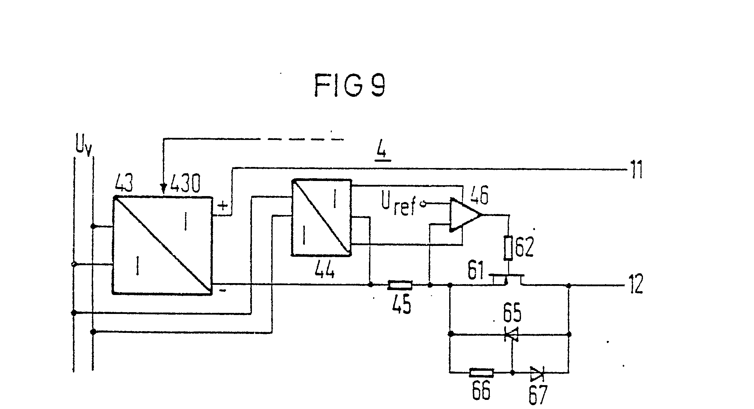

Die mechanischen Schalter 31 und 32 auf der 60-V-Seite der Speiseschaltungen können mit geringem Aufwand durch Einwirkung auf die Speiseschaltungen, insbesondere auf die Schalttransistoren der als Umrichter ausgebildeten Schaltungsanordnungen ersetzt werden. Ein Beispiel hierfür geht aus Fig. 8 hervor. Ein Umrichter kann entsprechend Fig. 8 dadurch aktiviert bzw. deaktiviert werden, dass die Steuerelektronik, die Einschaltimpulse an den Schalttransistor 56 abgibt, mittels einer Steuerspannung freigegeben oder blockiert wird.

Die Primärwicklung des Übertragers 55 wird mittels des Transistors 56 impulsweise mit dem an Versorgungsspannung $U_V$ liegenden Kondensator 51 verbunden. Zur Ansteuerung des Transistors 56 dient die Steuerelektronik 52, die zwei mittels der Dioden 53 und 54 voneinander entkoppelte Steuereingänge für ein Sperrsignal S bzw. für eine Steuerspannung $U_{St}$ aufweist. Die Sekundärwicklung des Übertragers 55 ist über die Diode 57 an den Ausgangskondensator 58 geführt. Die Polung der Diode 57 ergibt die positive Ausgangsspannung U4. Ersetzt man die Diode 57 durch die Diode 59, so liegt am Ausgang die entgegengesetzt gepolte Spannung U5.

Die in Fig. 8 gezeigte Speiseschaltung ist in bekannter Weise (Funkschau 1/1983, Seite 68) als Eintakt-Sperrwandler ausgebildet. Während der Impulsdauer ist der Schalttransistor 56 durchlässig. Bei konstanter Periodendauer wird die Impulsdauer und damit die Spannung U4 bzw. U5 durch die Steuerspannung $U_{St}$ verändert. Wird die negative Steuerspannung dem Betrag nach grösser, so werden die Impulse immer schmäler und verschwinden schliesslich. Die Ausgangsspannung U4 bzw. U5 wird dann «Null». Am Anschluss für das Sperrsignal S kann man ebenfalls durch Anlegen einer geeigneten Spannung, unabhängig von der Steuerspannung $U_{St}$, die Spannung U4 bzw. U5 auf «Null» bringen.

Wenn man in Fig. 8 die Diode 57 durch die Diode 59 ersetzt, bekommt man die Prinzipschaltung eines Durchflusswandlers. Die Ansteuerung der Impulse und die elektronische Geräteabschaltung bleibt im Prinzip erhalten.

Fig. 9 zeigt eine Schaltungsanordnung, bei der der Halbleiterschalter 6 durch eine Hilfsspannungsquelle der zugeordneten Speiseschaltung 4 angesteuert wird. Die Speiseschaltung 4 enthält ausser dem Hauptumrichter 43 einen Hilfsumrichter 44, der ebenfalls an die Versorgungsspannung $U_V$ angeschlossen ist und im Hauptumrichter 43 benötigte Hilfsspannungen erzeugt. Bei dem Hilfsumrichter 44 ist ein Anschluss für das Bezugspotential an den Minuspol des Ausgangs des Hauptumrichters 43 angeschlossen.

Der Widerstand 45 ist zwischen dem Pluspol des Ausgangs des Hauptumrichters 43 und der Source-Elektrode des Feldeffekttransistors 61 angeordnet. Der Komparator 46 ist mit einem Eingang an eine Vergleichsspannung $U_{ref}$ und mit seinem anderen Eingang an die Source-Elektrode des Feldeffekttransistors 61 angeschlossen und wird aus der Hilfsspannungsquelle 44 gespeist.

Entsprechend Fig. 4 sind parallel zum Feldeffekttransistor 61 der Thyristor 6, die Z-Diode 67 und der Widerstand 66 angeordnet.

Wird der Hauptumrichter 43 der Speiseschaltung 4 mit Hilfe eines an den Steuereingang 430 angelegten Steuerpotentials aktiviert, so fliesst über den Widerstand 45 und den Thyristor 65 ein Strom, der am Widerstand 45 einen Spannungsabfall hervorruft. Dieser Spannungsabfall wird im Komparator 46 mit der Referenzspannung $U_{ref}$ verglichen.

Überschreitet der Strom einen vorgegebenen Grenzwert, so legt der Komparator 46 über den Widerstand 62 Einschaltpotential an die Steuerelektrode des Feldeffekttransistors 61. Der Feldeffekttransistor 61 wird leitend und löscht den Thyristor 65.

Der Grenzwert des Stromes, bei dem der Komparator 46 anspricht, wird zweckmässigerweise derart gewählt, dass er über dem Kurzschlussstrom des Hilfsumrichters 5 (Fig. 5) liegt.

## Patentansprüche

1. Schaltungsanordnung mit zwei mit einander entgegengesetzter Polung an einen Verbraucher (1) anschliessbaren Speiseschaltungen (4, 5) und mit einem jeweils über Speisestrompfade an die Speiseschaltungen (4, 5) angeschlossenen Anschlusspaar (11, 12) für einen Lastwiderstand (1) und mit einer Vorrichtung zur wahlweisen Speisung des Lastwiderstandes (1) mittels der einen oder der anderen Speiseschaltung (4, 5), dadurch gekennzeichnet, dass wenigstens bei einer der Speiseschaltungen (4, 5) zur Aktivierung vorgesehene Schaltmittel (31, 32) ausserhalb ihres Ausgangskreises angeordnet sind, dass wenigstens bei einer mittels ausserhalb des Ausgangskreises angeordneter Schaltmittel (31, 32) aktivierbaren Speiseschaltung (4, 5) zwischen der Speiseschaltung (4, 5) und dem Anschlusspaar (11, 12) für einen Lastwiderstand (1) in einem der Speisestrompfade ein Transistor (61) angeordnet ist und dass die Steuerelektrode des Transistors an ein derartiges Steuerpotential geführt ist, dass der Transistor bei aktivierter zugeordneter Speiseschaltung leitend und bei deaktivierter zugeordneter Speiseschaltung gesperrt ist.

2. Schaltungsanordnung nach Anspruch 1, dadurch gekennzeichnet, dass der Transistor (61) mit der Steuerelektrode an den anderen Strompfad geführt ist.

3. Schaltungsanordnung nach Anspruch 1, dadurch gekennzeichnet, dass der Transistor (61) durch eine Hilfsspannungsquelle (44) der zugeordneten Speiseschaltung (4) steuerbar ist.

4. Schaltungsanordnung nach einem der Ansprüche 1 bis 3, dadurch gekennzeichnet, dass die eine Speiseschaltung (4) eine Fernspeisestromquelle zur Fernspeisung von in einer Fernspeiseschleife liegenden elektrischen Verbrauchern mittels Gleichstrom-Reihenspeisung und die andere Speiseschaltung (5) eine Prüfspannungsquelle einer Vorrichtung zur Prüfung des Widerstandes der Fernspeiseschleife ist, und dass die die Fernspeisestromquelle bildende Speiseschaltung (4) mittels ausserhalb des Ausgangskreises angeordneter Schaltmittel, die durch die Vorrichtung zur Prüfung des Schleifenwiderstandes in Abhängigkeit vom Schleifenwiderstand aktivierbar und/oder deaktivierbar ist, angesteuert wird, und dass am Ausgang der die Fernspeisestromquelle bildenden Speiseschaltung (4) oder jeweils am Ausgang der Speiseschaltungen (4, 5) in einem der jeweiligen Strompfade der Transistor (61) vorgesehen ist, der mit einer Steuerelektrode an den jeweils anderen Strompfad geführt ist.

5. Schaltungsanordnung nach einem der Ansprüche 1 bis 4, dadurch gekennzeichnet, dass der Transistor ein Feldeffekttransistor (61) ist, der mit seiner Source-Drain-Strecke in einem der beiden Strompfade angeordnet und der mit seinem Gate an den anderen Strompfad geführt ist.

6. Schaltungsanordnung nach einem der Ansprüche 1 bis 5, dadurch gekennzeichnet, dass wenigstens eine der Speiseschaltungen (4, 5) eine am Ausgang wirksame Diode (50, 410, 420) enthält, die für die eigene Ausgangsspannung in Sperrichtung gepolt ist.

7. Schaltungsanordnung nach einem der Ansprüche 4 bis 6, dadurch gekennzeichnet, dass am Ausgang der die Prüfspannungsquelle bildenden Speiseschaltung (5) ein Kontakt (72a) eines Relais (71a) angeordnet ist.

8. Schaltungsanordnung nach einem der Ansprüche 4 bis 7, dadurch gekennzeichnet, dass ein Strommesswiderstand (82) für den Prüfstrom und ein Strommesswiderstand (81) für den Fernspeisestrom unmittelbar in Serie geschaltet und derart angeordnet sind, dass der Strommesswiderstand (82) für den Prüfstrom in einem Stromzweig zwischen der Fernspeiseschleife (1a) und zwei zu den Speiseschaltungen führenden Strompfaden liegt und durch eine für den Fernspeisestrom in Durchlassrichtung gepolte Diode (83) überbrückt ist und dass der Strommesswiderstand (81) für den Fernspeisestrom an den Ausgang der die Fernspeisestromquelle bildenden Speiseschaltung (4) angeschlossen ist und dass an die Strommesswiderstände (81, 82) jeweils ein Komparator (84, 85) angeschlossen ist und dass die Ausgänge der Komparatoren (84, 85) über ein ODER-Glied (86) an einen Steuereingang (40) der die Fernspeisestromquelle bildenden Speiseschaltung (4) geführt sind.

9. Schaltungsanordnung nach einem der Ansprüche 4 bis 8, dadurch gekennzeichnet, dass die die Fernspeisestromquelle und die Prüfspannungsquelle bildenden Speiseschaltungen (4, 4a; 5, 5a) zusammen mit der Vorrichtung (8, 8a) zur Prüfung des Schleifenwiderstandes in ein und derselben Baueinheit (92, 93) untergebracht sind und dass der Ausgang der die Prüfspannungsquelle bildenden Speiseschaltung (5a), der über den einen Strompfad an einen Strommesswiderstand (82a) geführt ist, über den anderen Strompfad getrennt herausgeführt ist.

10. Schaltungsanordnung nach Anspruch 9, dadurch gekennzeichnet, dass die Baueinheit (92) mit einer weiteren gleichartigen Baueinheit (93) an der Fernspeiseschleife (1a) angeschlossen ist.

11. Schaltungsanordnung nach einem der Ansprüche 5 bis 10, dadurch gekennzeichnet, dass parallel zur Source-Drain-Strecke des Feldeffekttransistors (61) die Anoden-Kathoden-Strecke eines Thyristors (65) angeordnet ist und dass die Steuerelektrode des Thyristors derart über einen Widerstand (66) an die eine und über einen nichtlinearen Zweipol (67) nach Art einer Z-Diode, der bei Spannungen unterhalb einer Schwellenspannung gesperrt und bei Spannungen oberhalb einer Schwellenspannung leitend ist, an die andere Hauptelektrode geführt ist, dass der Widerstand (66) parallel zur Steuerstrecke des Thyristors (65) liegt.

12. Schaltungsanordnung nach einem der Ansprüche 5 bis 9, dadurch gekennzeichnet, dass parallel zur Steuerstrecke des Feldeffekttransistors (61) ein Widerstand (64) oder eine Z-Diode (63) oder deren Parallelschaltung angeordnet ist.

**Revendications**

1. Montage comportant deux circuits d'alimentation (4, 5) pouvant être raccordés, avec des polarités réciproquement opposées, à un appareil d'utilisation (1), et un couple de bornes (11, 12), raccordées respectivement par l'intermédiaire de voies de courant d'alimentation aux circuits d'alimentation (4, 5), pour une résistance de charge (1), et un dispositif pour alimenter la résistance de charge (1) au choix à l'aide de l'un ou de l'autre des circuits d'alimentation (4, 5), caractérisé par le fait que des moyens de commutation (31, 32) prévus pour l'activation sont disposés à l'extérieur du circuit de sortie d'au moins l'un des circuits d'alimentation (4, 5) qu'au moins dans un circuit d'alimentation (4, 5) pouvant être activé à l'aide de moyens de commutation (31, 32) disposés à l'extérieur du circuit de sortie, un transistor (61) est branché dans une des voies de courant d'alimentation, entre le circuit d'alimentation (4, 5) et le couple de bornes (11, 12) pour une résistance de charge (1) et que l'électrode de commande du transistor est raccordée à un potentiel de commande tel que ce transistor est conducteur lorsque le circuit d'alimentation associé est activé, et est bloqué lorsque le circuit d'alimentation associé est désactivé.

2. Montage suivant la revendication 1, caractérisé par le fait que la transistor (61) est raccordé par l'électrode de commande à l'autre voie de courant.

3. Montage suivant la revendication 1, caractérisé par le fait que le transistor (61) peut être commandé au moyen d'une source de tension auxiliaire (44) du circuit d'alimentation (4) associé.

4. Montage suivant l'une des revendications 1 à 3, caractérisé par le fait que l'un (4) des circuits d'alimentation constitue une source de courant d'alimentation à distance servant à alimenter à distance des appareils électriques d'utilisation situés dans une boucle d'alimentation à distance, au moyen d'une alimentation série en courant continu, et que l'autre circuit d'alimentation (5) constitue une source de tension d'essai d'un dispositif servant à contrôler la résistance de la boucle d'alimentation à distance, et que le circuit d'alimentation (4) constituant la source de courant d'alimentation à distance est commandé à l'aide de moyens de commutation, qui sont disposés à l'extérieur du circuit de sortie et peuvent être activés et/ou désactivés par le dispositif servant à contrôler la résistance de la boucle, en fonction de la résistance de cette dernière, et qu'à la sortie du circuit d'alimentation (4) constituant la source de courant d'alimentation à distance ou respectivement à la sortie du circuit d'alimentation (4, 5) se trouve disposé, dans l'une des voies respectives de courant, le transistor (61), qui est raccordé par une électrode de commande à l'autre voie respective de courant.

5. Montage suivant l'une des revendications 1 à 4, caractérisé par le fait que le transistor est un transistor à effet de champ (61), dont la voie source-drain est située dans l'une des deux voies de courant et dont la grille est raccordée à l'autre voie de courant.

6. Montage suivant l'une des revendications 1 à 5, caractérisé par le fait qu'au moins l'un des circuits d'alimentation (4, 5) contient une diode (50, 410, 420), qui est active au niveau de la sortie et est polarisée en inverse pour sa propre tension de sortie.

7. Montage suivant l'une des revendications 4 à 6, caractérisé par le fait qu'un contact (72a) d'un relais (71a) est disposé à la sortie du circuit d'alimentation (5) constituant la source de tension d'essai.

8. Montage suivant l'une des revendications 4 à 7, caractérisé par le fait qu'une résistance (82) de mesure du courant d'essai et une résistance (81) de mesure du courant d'alimentation à distance sont branchées directement en série et sont disposées de telle sorte que la résistance (82) de mesure du courant d'essai est située dans une branche de courant entre la boucle d'alimentation à distance (1a) et deux voies de courant aboutissant aux circuits d'alimentation, et est shuntée par une diode (83) polarisée dans le sens direct pour le courant d'alimentation à distance, et que la résistance (81) de mesure du courant d'alimentation à distance est raccordée à la sortie du circuit d'alimentation (4) constituant la source d'alimentation à distance, qu'un comparateur (84, 85) est raccordé respectivement aux résistances (81, 82) de mesure du courant et que les sorties des comparateurs (84, 85) sont raccordées par l'intermédiaire d'un circuit OU (86) à une entrée de commande (40) du circuit d'alimentation (4) constituant la source de courant d'alimentation à distance.

9. Montage suivant l'une des revendications 4 à 8, caractérisé par le fait que les circuits d'alimentation (4, 4a; 5, 5a) constituant la source de courant d'alimentation à distance et la source de tension d'essai sont logés, conjointement avec le dispositif (8, 8a) servant à contrôler la résistance de boucle, dans un même module (92, 91) et que la sortie du circuit d'alimentation (5, 5a), qui constitue la source de tension d'essai et est raccordée par l'intermédiaire d'une voie de courant à une résistance (82a) de mesure du courant, ressort séparément par l'intermédiaire de l'autre voie de courant.

10. Montage suivant la revendication 9, caractérisé par le fait que le module (92) est raccordé à un autre module identique (93) au niveau de la boucle d'alimentation en courant (1a).

11. Montage suivant l'une des revendications 5 à 10, caractérisé par le fait que la voie anode-cathode d'un thyristor (65) est branchée en parallèle avec la voie source-drain du transistor à effet de champ (61) et que l'électrode de commande du thyristor est raccordée à une première électrode principale par l'intermédiaire d'une résistance (66) et à l'autre électrode principale, par l'intermédiaire d'un dipôle non linéaire (67) réalisé à la manière d'une diode Zener, qui est bloquée pour des tensions inférieures à une tension de seuil et est passante pour des tensions supérieures à une tension de seuil, de telle sorte que la résistance (66) est disposée en parallèle avec la voie de commande du thyristor (65).

12. Montage suivant l'une des revendications 5 à 9, caractérisé par le fait qu'une résistance (64) ou une diode Zener (63) ou le montage en parallèle de cette résistance et de cette diode est branchée en parallèle avec la voie de commande du transistor à effet de champ.

**Claims**

1. Circuit arrangement having two feed circuits (4, 5) which can be connected to a load (1) with mutually opposite polarization, and having a pair of connections (11, 12), which are in each case connected to the feed circuits (4, 5) via feed current paths, for a load resistance (1), and having a device for optionally feeding the load resistance (1) by means of one or the other feed circuit (4, 5), characterized in that, at least at one of the feed circuits (4, 5), switching means (31, 32), provided for activation, are arranged outside its output circuit, in that, at least at one feed circuit (4, 5), which can be activated by means of switching means (31, 32) outside the output circuit, a transistor (61) is arranged in one of the feed current paths between the feed circuit (4, 5) and the pair of connections (11, 12) for a load resistance (1), and in that the control electrode of the transistor is connected to such a control potential that the transistor is conducting with an activated associated feed circuit and is cut off with a deactivated associated feed circuit.

2. Circuit arrangement according to Claim 1, characterized in that the control electrode of the transistor (61) is connected to the other current path.

3. Circuit arrangement according to Claim 1, characterized in that the transistor (61) can be controlled by means of an auxiliary voltage source (44) of the associated feed circuit (4).

4. Circuit arrangement according to one of Claims 1 to 3, characterized in that one feed circuit (4) is a power-feeding current source for feeding power to electric loads located in a power-feeding loop by means of direct-current series feeding and the other feed circuit (5) is a test voltage source of a device for testing the resistance of the power feeding loop, and in that the feed circuit (4) forming the power-feeding current source is driven by means of switching means arranged outside the output circuit, which can be activated and/or deactivated in dependence on the loop resistance by the device for testing the loop resistance, and in that the transistor (61) is provided at the output of the feed circuit (4) forming the power-feeding current source or in each case at the output of the feed circuits (4, 5) in one of the respective current paths, one control electrode of which transistor is connected to the respectively other current path.

5. Circuit arrangement according to one of Claims 1 to 4, characterized in that the transistor is a field-effect transistor (61) the source-drain path of which is arranged in one of the two current paths and the gate of which is connected to the other current path.

6. Circuit arrangement according to one of Claims 1 to 5, characterized in that at least one of the feed circuits (4, 5) contains a diode (50, 410, 420) which is polarized in the reverse direction for its own output voltage and which is effective at the output.

7. Circuit arrangement according to one of Claims 4 to 6, characterized in that a contact (72a) of a relay (71a) is arranged at the output of the feed circuit (5) forming the test voltage source.

8. Circuit arrangement according to one of Claims 4 to 7, characterized in that a current sensing resistor (82) for the test current and a current sensing resistor (81) for the power-feeding current are directly connected in series and are arranged in such a manner that the current sensing resistor (82) for the test current is located in a current branch between the power-feeding loop (1a) and two current paths leading to the feed circuits and is bypassed by a diode (83) polarized in the forward direction for the power-feeding current, and in that the current sensing resistor (81) for the power-feeding current is connected to the output of the feed circuit (4) forming the power-feeding current source and in that a comparator (84, 85) is in each case connected to the current sensing resistors (81, 82) and in that the outputs of the comparators (84, 85) are connected via an OR gate (86) to a control input (40) of the feed circuit (4) forming the power-feeding current source.

9. Circuit arrangement according to one of Claims 4 to 8, characterized in that the feed circuits (4, 4a; 5, 5a) forming the power-feeding current source and the test voltage source, together with the device (8, 8a) for testing the loop resistance, are accommodated in one and the same constructional unit (92, 93) and in that the output of the feed circuit (5a) forming the test voltage source, which is connected via one current path to one current sensing resistor (82a), is brought out separately via the other current path.

10. Circuit arrangement according to Claim 9, characterized in that the constructional unit (92) is connected to a further similar constructional unit (93) on the power feeding loop (1a).

11. Circuit arrangement according to one of Claims 5 to 10, characterized in that the anode-cathode path of a thyristor (65) is arranged in parallel with the source-drain path of the field-effect transistor (61) and in that the gate electrode of the thyristor is connected via a resistor (66) to one and via a non-linear two-terminal network (67) in the manner of a Z diode, which is cut-off with voltages below a threshold voltage and conducts with voltages above a threshold voltage, to the other main electrode in such a manner that the resistor (66) is parallel to the controlled path of the thyristor (65).

12. Circuit arrangement according to one of Claims 5 to 9, characterized in that a resistor (64) or a Z diode (63) or their parallel circuit is arranged in parallel with the controlled path of the field-effect transistor.

1/5

FIG 1

FIG 2

FIG 3

## FIG 4

## FIG 5

FIG 6

FIG 8

## 4/5

# FIG 7

5/5

FIG 9